# EUROPÄISCHE PATENTSCHRIFT

(11) **EP 2 317 880 B1**
(45) Veröffentlichungstag und Bekanntmachung des Hinweises auf die Patenterteilung: **04.01.2012**
(21) Anmeldenummer: 09777085.3
(22) Anmeldetag: 10.07.2009
(51) Int. Cl.: A23L 3/16, A23L 3/22, A23L 2/46, F28D 1/047, F28D 7/00, F28D 7/02, F28D 15/00

(54) **VERFAHREN UND VORRICHTUNG ZUR WÄRMEBEHANDLUNG VON FLÜSSIGEN LEBENSMITTELN**
METHOD AND DEVICE FOR HEAT-TREATING LIQUID FOODS
PROCÉDÉ ET DISPOSITIF POUR LE TRAITEMENT THERMIQUE DE PRODUITS ALIMENTAIRES LIQUIDES

(30) Priorität: 14.08.2008 DE 102008037726
(43) Veröffentlichungstag der Anmeldung: 11.05.2011
(73) Patentinhaber: KHS GmbH, 44143 Dortmund (DE)
(72) Erfinder: CLÜSSERATH, Ludwig, 55543 Bad Kreuznach (DE); BRUCH, Bernd, 55595 Weinsheim (DE)
(86) Internationale Anmeldenummer: PCT/EP2009/005000
(87) Internationale Veröffentlichungsnummer: WO 2010/017864

(56) Entgegenhaltungen:
- WO-A-94/12062
- GB-A- 255 711
- JP-A- 5 292 925
- NL-A- 8 802 698

## Beschreibung

Die Erfindung betrifft ein Verfahren zur Wärmebehandlung von flüssigen Lebensmitteln, insbesondere Getränken, vorzugsweise von Fruchtsäften oder dergleichen hochviskosen Flüssigkeiten mit oder ohne Feststoffanteil, wonach das flüssige Lebensmittel durch zumindest ein Wärmeträgermedium im Zuge eines Wärmetausches erwärmt wird.

Die Wärmebehandlung von flüssigen Lebensmitteln ist von besonderer Bedeutung, um die Haltbarkeit und Genussfähigkeit zu gewährleisten. Im Zuge einer solchen Wärmebehandlung, auch Pasteurisierung oder Pasteurisation genannt, geht es darum, kurzzeitig die betreffenden flüssigen Lebensmittel auf ca. 60° C bis 90° C, in bestimmten Fällen sogar bis auf 140° C zu erwärmen, um etwaige Mikroorganismen abzutöten. Dabei kommt es entsprechend den Erkenntnissen des französischen Chemikers Louis Pasteur ergänzend darauf an, die wärmebehandelten Substanzen respektive Lebensmittel in einem verschlossenen Behältnis bzw. in einem abgeschlossen Bereich zu bevorraten. Denn nur so kann gewährleistet werden, dass neue Mikroorganismen nach Abtöten der gegebenenfalls vorhandenen nicht eindringen können.

Neben der bekannten Pasteurisierung von Milch werden auch andere flüssige Lebensmittel wie Wein, Fruchtsaft oder Bier der beschriebenen Wärmebehandlung bzw. Pasteurisation unterzogen. Zu diesem Zweck greift man in der Praxis u. a. auf Wärmetauscher zurück, die als Röhrenwärmetauscher entsprechend der gattungsbildenden DE 297 24 324 U1 ausgebildet sind. Tatsächlich finden sich hier in einem zylindrischen Wärmetauscher eine Vielzahl von Innenrohren, durch welche das zu wärmebehandelnde flüssige Lebensmittel geführt wird. Demgegenüber durchströmt das Wärmeträgermedium das Außenrohr bzw. den zwischen den einzelnen Innenrohren verbleibenden Freiraum. Eine weitere Anlage zur sterilisierung ist beispeilsweise in der WO 94/12062 beschrieben.

Die bekannte Vorgehensweise hat sich grundsätzlich bewährt, erfordert jedoch in Bezug auf die erforderlichen Wärmeaustauschflächen einen recht hohen Raum- und Platzbedarf. Hinzu kommt, dass Röhrenwärmetauscher bzw. solche mit Rohrbündeln dann Probleme bereiten können, wenn hochviskose Getränke wie beispielsweise Fruchtsäfte zur Wärmebehandlung anstehen. Dies lässt sich darauf zurückführen, dass die Rohrbündel in der Regel eine mehr oder minder starke Umlenkung eingangsseitig und/oder ausgangsseitig eines zugehörigen Wärmetauschers aufweisen. In dieser einen oder den mehreren Umlenkungen können sich in beispielsweise Fruchtsäften vorhandene Feststoffe wie Fruchtfasern verfangen. Als Folge hiervon bilden sich Ablagerungen, die im schlimmsten Fall zu Verstopfungen des Wärmetauschers führen oder führen können.

Des Weiteren bilden im Lebensmittel mitgeführte Feststoffe häufig Beläge im Innern des Wärmetauschers, welche sich bei einer zerklüfteten Bauweise mit scharfen Umlenkungen nur schwer oder praktisch gar nicht entfernen lassen. Auch in diesem Fall sind Funktionsbeeinträchtigungen des Wärmetauschers und/oder ein Nachlassen seiner Effizienz infolge der sich absetzenden Beläge möglich und werden in der Praxis beobachtet.

Ähnliches gilt für eine Vorrichtung zur Wärmebehandlung von Milch, wie sie in der DE 30 40 943 C2 beschrieben wird. Zwar kommt in diesem Fall ein Plattenwärmetauscher zum Einsatz, bei welchem der Wärmeaustausch im Gegenstrom stattfindet. Erfolg versprechende Lösungsansätze für die zuvor skizzierten Probleme lassen sich hieraus jedoch nicht herleiten.

Der Erfindung liegt das technische Problem zugrunde, ein Verfahren zur Wärmebehandlung von flüssigen Lebensmitteln der eingangs beschriebenen Ausgestaltung so weiter zu entwickeln, dass ein möglichst widerstandsarmer Fluidstrom ohne starke Umlenkungen und mit möglichst homogenen Geschwindigkeitsprofil zur Verfügung gestellt wird, um Ablagerungen zu verhindern, und zwar bei zugleich kompakter und Platz sparender Bauweise eines zugehörigen Wärmetauschers. Außerdem soll eine besonders geeignete Vorrichtung angegeben werden.

Zur Lösung dieses technischen Problems ist ein gattungsgemäßes Verfahren im Rahmen der Erfindung dadurch gekennzeichnet, dass das zu wärmebehandelnde Lebensmittel und/oder das Wärmeträgermedium entlang eines spiral- und/oder wendelförmigen Fluidkanals geführt werden.

Der Fluidkanal für das Lebensmittel wird auch als Lebensmittel-Fluidkanal bezeichnet. Das Wärmeträgermedium wird entlang eines Wärmeträgermedium-Fluidkanals geführt. Erfindungsgemäß ist nun wenigstens einer dieser beiden Fluidkanäle oder sind beide Fluidkanäle jeweils spiral- und/oder wendelförmig ausgelegt. Das heißt, der jeweilige Fluidkanal beschreibt bei spiralförmiger Ausbildung eine Kurve, die um einen zentralen Punkt respektive eine Achse des zumeist zylindrischen Wärmetauschers verläuft, und sich je nach Laufrichtung immer weiter von der Achse entfernt oder sich dieser annähert. Üblicherweise erstreckt sich eine solche Spirale und damit der jeweilige Fluidkanal in einer Ebene, kann aber auch über eine räumliche Ausdehnung verfügen. Zu erwähnen sei an dieser Stelle die so genannte archimedische Kugelspirale, welche eine Spirale beschreibt, die sich entlang einer Kugelfläche von der Achse bzw. ihrem Mittelpunkt entfernt respektive sich diesem annähert.

Im Allgemeinen und aus Gründen einer besonders kompakten Bauweise werden der wenigstens eine Fluidkanal oder werden beide Fluidkanäle wendelförmig geführt. Das heißt, der jeweilige Fluidkanal beschreibt eine Kurve, die sich mit konstanter Steigung um den Mantel eines Zylinders windet. Insofern eignet sich ein solcher wendelförmiger Verlauf des Fluidkanals besonders dann, wenn ein insgesamt zylindrischer Wärmetauscher zum Einsatz kommt. Dieser Wärmetauscher kann im Querschnitt aus einem oder mehreren Rohrringen aufgebaut sein, wobei sich der jeweilige Fluidkanal im Innern eines solchen Rohrringes platzieren lässt. Sofern in diesem Zusammenhang der Fluidkanal mit einem Innenmantel und/oder Außenmantel des Rohrringes flüssigkeitsdicht verbunden wird, werden praktisch automatisch zwei zueinander parallel verlaufende jeweils wendelförmige Fluidkanäle definiert, die über ihre gesamte Länge in Wärmekontakt stehen und folglich eine besonders große Wärmeaustauschfläche zur Verfügung stellen. - Selbstverständlich kann der jeweilige Fluidkanal auch über eine kombinierte spiral- und wendelförmige Gestalt verfügen. In der Regel ist dieser jedoch durchgängig wendelförmig mit gleich bleibender Steigung wie beschrieben ausgelegt.

Im Rahmen der Erfindung ist es möglich, das wärmezubehandelnde flüssige Lebensmittel indirekt mit Hilfe des Wärmeträgermediums einer Wärmebehandlung respektive Pasteurisation zu unterziehen. Hiermit ist im Rahmen der Erfindung die Vorgehensweise gemeint, dass zunächst die Wärme vom Wärmeträgermedium auf ein Transfermedium und dann von diesem auf das Lebensmittel übertragen wird. Durch diese Auslegung besteht die Möglichkeit, die Fluidkanäle von einerseits dem Lebensmittel und andererseits dem Wärmeträgermedium örtlich über ihre gesamte Länge durch den Fluidkanal des Transfermediums voneinander zu trennen. Dadurch ist gewährleistet, dass selbst bei einer möglichen Leckage des Fluidkanals des Lebensmittels das Lebensmittel nicht durch das Wärmeträgermedium dekontaminiert wird. Denn ein direkter Kontakt wird - wie beschrieben - durch das zwischengeschaltete Transfermedium verhindert. Dabei kann das Transfermedium so ausgelegt werden, dass es in einem völlig autarken und geschlossenen Fluidkanal im Innern des Wärmetauschers geführt wird und folglich von der äußeren Umgebung abgeschlossen ist. Dadurch kann der Eintrag von Mikroben erfolgreich verhindert werden, selbst wenn der Lebensmittel-Fluidkanal eine Leckage aufweisen sollte.

Als Wärmeträgermedium mag Wasser oder auch das zuvor erwärmte Lebensmittel dienen, um die Energieverluste so gering wie möglich zu halten. Selbstverständlich sind auch andere Flüssigkeiten oder sogar Gase als Wärmeträgermedium denkbar und werden von der Erfindung umfasst.

Dabei hat sich besonders bewährt, wenn der jeweilige Fluidkanal über einen Rechteckprofilquerschnitt mit gegebenenfalls abgerundeten Ecken verfügt. Sofern ein solcher wendelförmiger Fluidkanal aus dem beschriebenen Rechteckhohlprofil im Innern eines Rohrringes platziert wird, lässt sich eine besonders große Wärmeaustauschfläche auf kleinstem Raum realisieren. Denn in diesem Fall kann das flüssige Lebensmittel durch den betreffenden wendelförmigen und mit dem Rechteckprofilquerschnitt ausgerüsteten Fluidkanal geführt werden, wohingegen das Wärmeträgermedium durch den Rohrring strömt, und zwar beispielsweise in axialer Richtung. Selbstverständlich kann auch umgekehrt verfahren werden. In diesem Fall würde das zu wärmebehandelnde flüssige Lebensmittel durch den Rohrring geführt werden, wohingegen der wendelförmige Fluidkanal das Wärmeträgermedium aufnimmt.

Sofern der Fluidkanal mit dem Rechteckprofilquerschnitt den Rohrring zwischen seinem Innenmantel und seinem Außenmantel ausfüllt, wird in den Zwischenräumen zwischen den einzelnen Wendeln ein weiterer und ebenfalls wendelförmiger Fluidkanal mit der selben Steigung definiert, wobei beide Fluidkanäle parallel zueinander verlaufen. Dadurch ist ein besonders inniger Wärmekontakt gegeben. Denn bei dieser Variante werden alle Fluidkanäle der an der Wärmeübertragung beteiligten Medien wendelförmig durch den Rohrring bzw. den Wärmetauscher geführt.

Um die beteiligten Oberflächen zu vergrößern und eine Optimierung der Strömungsprofile zu gewährleisten, hat es sich ergänzend als günstig erwiesen, wenn der jeweilige Fluidkanal außen- und/oder innenwandseitig mit im Wesentlichen quer zur Strömung verlaufenden Strömungswiderständen zur Turbulenzerzeugung ausgerüstet ist. Die Strömungswiderstände finden sich dabei regelmäßig an den Breitseiten des Rechteckprofilquerschnitts, weil der Fluidkanal mit einer oder mit beiden Schmalseiten mit dem Innenmantel respektive Außenmantel des Rohrringes flüssigkeitsdicht verbunden ist. Das kann im Zuge einer Laserschweißung oder auch auf andere Art und Weise gewährleistet werden.

Um den Fluidkanal mit Rechteckprofilquerschnitt und wendelförmiger Gestalt herstellen zu können, hat es sich bewährt, allgemein ein Rechteckprofil durch so genanntes Hydroforming aus entsprechend gestalteten Rohren herzustellen. Im Zuge des Hydroforming oder Innenhochdruckumformens wird ein rohrförmiges Werkstück durch Innendruck aufgeweitet und gleichzeitig durch eine Axialkraft gestaucht.

Hier kann beispielsweise mit zylindrischen Rohren gearbeitet werden, die durch den Innendruck die gewünschte Gestalt mit dem Rechteckprofilquerschnitt erhalten. Da das Innenhochdruckumformen meistens in einem geschlossenen Werkzeug stattfindet, lässt sich dem zu bearbeitenden Rohrstück nicht nur der Rechteckprofilquerschnitt aufprägen, sondern das Rohrstück kann in dem Werkzeug zugleich auch mit der notwendigen wendelförmigen Gestalt versehen werden. Das heißt, es ist denkbar, durch Innenhochdruckumformen einzelne Wendelsegmente mit Rechteckprofilquerschnitt aus zylindrischen Rohren herzustellen. Diese Wendelsegmente mögen einen Winkelbereich von beispielsweise bis zu 360° beschreiben.

Mehrere solcher Wendelsegmente können anschließend (beispielsweise durch Schweißen) miteinander verbunden werden und den gewünschten wendelförmigen Fluidkanal darstellen. Des Weiteren kann durch das beschriebene Innenhochdruckumformen automatisch und in einem Arbeitsgang dafür gesorgt werden, dass die Rohre bzw. Rohrstücke als Ausgangsmaterialien nicht nur über die gewünschte wendelförmige Gestalt mit dem Rechteckprofilquerschnitt verfügen, sondern zugleich mit den quer zur Strömung verlaufenden Strömungswiderständen ausgerüstet sind. Tatsächlich lassen sich diese Strömungswiderstände als Riffelungen oder Prägungen definieren und sind an den Breitseiten des Rechteckes vorgesehen. Dabei mögen die Strömungswiderstände jeweils in radialer Richtung im Vergleich zur Achse der Wendel ausgerichtet sein. Die Achse der Wendel bzw. die Wendelachse fällt üblicherweise mit der Achse des zylindrischen Wärmetauschers, also der Zylinderachse, zusammen.

Im Ergebnis werden ein Verfahren und eine Vorrichtung zur Wärmebehandlung von flüssigen Lebensmitteln vorgestellt, die sich durch eine kompakte Bauweise auszeichnen und welche einen besonders strömungsgünstigen Verlauf innerhalb der Fluidkanäle aufweisen. Dies lässt sich darauf zurückführen, dass durch den wendelförmigen Charakter des wenigstens einen Fluidkanals Knicke, scharfe Biegungen etc. vermieden werden. Als Folge hiervon eignet sich die Vorrichtung und auch das Verfahren besonders zur Wärmebehandlung von hochviskosen Flüssigkeiten respektive hochviskosen flüssigen Lebensmitteln. Mit solchen hochviskosen Lebensmitteln sind solche Lebensmittel im Rahmen der Erfindung gemeint, die über eine deutlich höhere Viskosität als beispielsweise Wasser verfügen. Oftmals besitzen derartige flüssige Lebensmittel einen nicht unerheblichen Feststoffanteil, der durch bei der Gewinnung des Lebensmittels zwangsläufig entstehende Fruchtbestandteile, Fruchtfasern etc. gekennzeichnet ist.

Da zunehmend solche Feststoffanteile bzw. Fruchtfasern von Verbrauchern in den betreffenden flüssigen Lebensmitteln gefordert werden und als besonderes Qualitätsmerkmal gelten, kommt der Behandlung derartiger hochviskoser Flüssigkeiten und insbesondere ihrer Pasteurisierung eine zunehmende Bedeutung zu. Dies hat die Erfindung erkannt und stellt zum ersten Mal eine Vorrichtung und ein Verfahren zur Wärmebehandlung solcher Flüssigkeiten zur Verfügung, die einen wartungsarmen und nahezu störungsfreien Betrieb gewährleisten. Denn Verstopfungen, Ablagerungen etc. sind aufgrund der strömungsgünstigen Flüssigkeitsführung nicht zu erwarten. Das alles wird darüber hinaus bei einem besonders kompakten Aufbau erreicht, so dass die Herstellungskosten für einen entsprechend gestalteten Wärmetauscher niedrig sind. Dies um so mehr, als der jeweils wendelförmig ausgestaltete Fluidkanal praktisch in einem einzigen Arbeitsschritt durch Innenhochdruckumformen ganz oder segmentweise produziert werden kann.

Gegenstand der Erfindung ist auch die Verwendung eines Wärmetauschers mit wenigstens einem Fluidkanal für die zu erwärmende Flüssigkeit und einem Fluidkanal für ein Wärmeträgermedium, wobei wenigstens einer der beiden Fluidkanäle spiralförmig und/oder wendelförmig ausgebildet ist. Ein solcher Wärmetauscher mit wenigstens einem wendelförmigen Fluidkanal ist grundsätzlich durch die DE 10 2006 019 844 A1 bekannt, allerdings in Verbindung mit einem Heizgerät. Folgerichtig zielt die erfindungsgemäße Verwendung nach dem geltenden Anspruch 14 auf den Einsatz eines solchen Wärmetauschers zur Wärmebehandlung und insbesondere Pasteurisierung von Getränken, respektive von flüssigen Lebensmitteln. Besonders geht es um die Wärmebehandlung hochviskoser flüssiger Lebensmittel mit oder ohne Feststoffanteil. Hierin sind die wesentlichen Vorteile zu sehen.

Im Folgenden wird die Erfindung anhand einer lediglich ein Ausführungsbeispiel darstellenden Zeichnung näher erläutert; es zeigen:

**Fig. 1** eine erfindungsgemäße Vorrichtung zur Wärmebehandlung schematisch,

**Fig. 2** ein Detail aus Fig. 1, nämlich den wendelförmigen Fluidkanal,

**Fig. 3** eine abgewandelte Ausführungsform der Erfindung und

**Fig. 4** eine weitere Variante der Erfindung mit zusätzlichem Transfermedium-Fluidkanal.

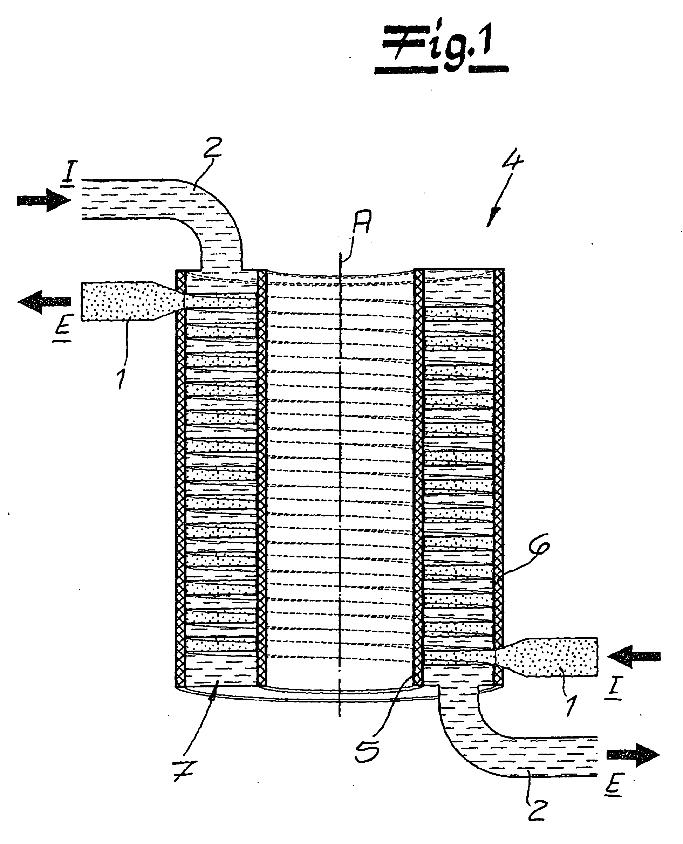

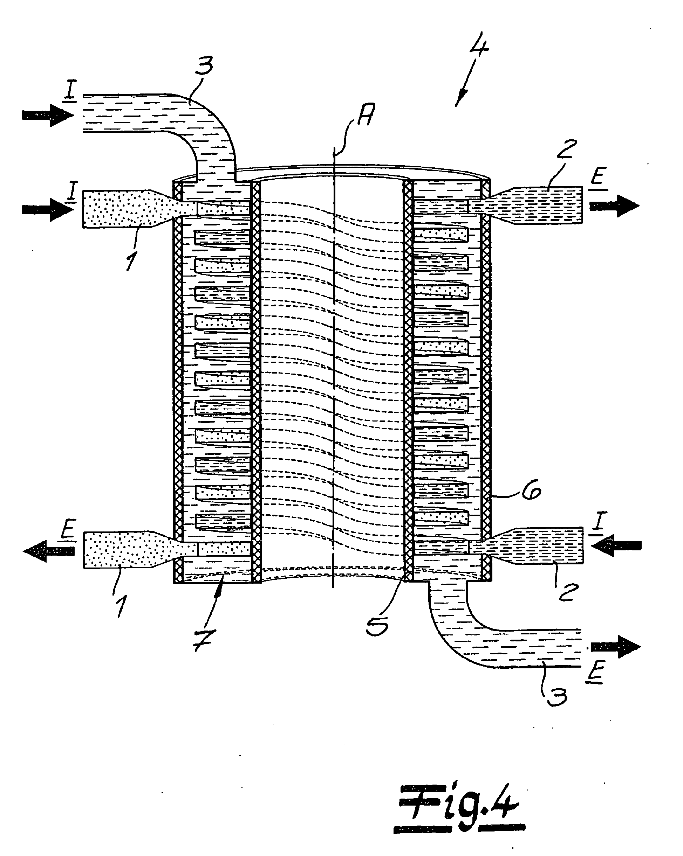

In den Figuren ist eine Vorrichtung zur Wärmebehandlung dargestellt. Diese verfügt in ihrem grundsätzlichen Aufbau über einen Lebensmittel-Fluidkanal 1 und wenigstens einen Wärmeträgermedium-Fluidkanal 2, die miteinander in direktem oder indirektem Wärmekontakt stehen. Im Rahmen der Variante nach Fig. 1 findet ein direkter Wärmeaustausch zwischen dem Lebensmittel-Fluidkanal 1 und dem Wärmeträgermedium-Fluidkanal 2 statt. Dagegen stellt die Fig. 4 eine Variante dar, bei welcher die Wärme von dem Wärmeträgermedium-Fluidkanal 2 auf den Lebensmittel-Fluidkanal 1 indirekt übertragen wird, nämlich unter Zwischenschaltung eines Transfermedium-Fluidkanals 3.

Die Fluidkanäle 1, 2 respektive 1, 2, 3 formen insgesamt einen Wärmetauscher 4 bzw. werden in einem solchen Wärmetauscher 4 aufgenommen. Dieser Wärmetauscher 4 stellt das Herz bzw. Kernstück der dargestellten Vorrichtung zur Wärmebehandlung dar.

Erfindungsgemäß ist nun vorgesehen, dass der Lebensmittel-Fluidkanal 1 und/oder der Wärmeträgermedium-Fluidkanal 2 wenigstens im Bereich ihres gemeinsamen Wärmetauschers 4 spiral- und/oder wendelförmig ausgebildet sind. Im Rahmen der Darstellung nach Fig. 1 verfügt der Lebensmittel-Fluidkanal 1 über eine wendelförmige Gestalt. Das heißt, der Lebensmittel-Fluidkanal 1 beschreibt im Raum eine Kurve, die sich mit konstanter Steigung um den Mantel eines Zylinders 5, 6 bzw. gleich beabstandet im Vergleich zu einer Wendelachse A windet. Die Wendelachse A stellt zugleich die Zylinderachse A des betreffenden Zylinders 5, 6 dar. Der Zylinder 5, 6 weist einen Innenmantel 5 und einen Außenmantel 6 auf, die zwischen sich einen Rohrring 7 definieren.

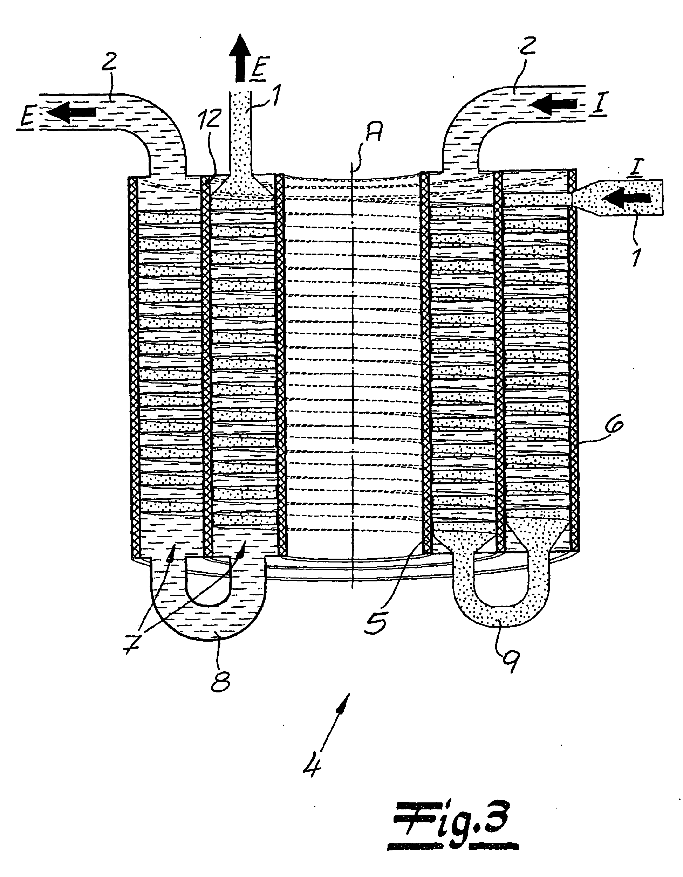

Im Rahmen der Variante nach Fig. 3 sind zwei konzentrisch und aneinander anliegend zu der gemeinsamen Achse A angeordnete Rohrringe 7 realisiert, die über jeweils eine Verbindungsleitung 8, 9 miteinander gekoppelt sind. In diesem Zusammenhang sorgt die Verbindungsleitung 8 dafür, dass das Wärmeträgermedium durch beide Rohrringe 7 von einem Einlass I bis zum Auslass E geführt wird. Vergleichbares gilt für die Verbindungsleitung 9, die ähnliches für das flüssige Lebensmittel und folglich den Lebensmittel-Fluidkanal 1 sicherstellt. Man erkennt, dass beide Rohrringe 7 durch eine Zwischenwand 12 voneinander getrennt sind. Die Zwischenwand 12 stellt den Außenmantel 6 für den radial innersten Rohrring 7 und zugleich den Innenmantel 5 für den radial äußeren Rohrring 7 dar.

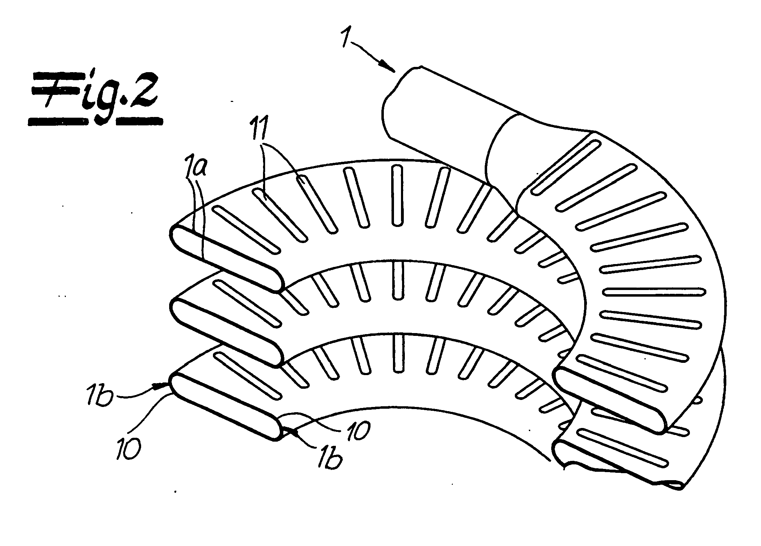

Im Rahmen der gesamten Darstellungen ist der Lebensmittel-Fluidkanal 1 derart in einer Wendel gestaltet, wie sie im Detail in der Fig. 2 gezeigt ist. Vergleichbares gilt für den Wärmeträgermedium-Fluidkanal 2 bei der Variante nach Fig. 4. Anhand dieser Detaildarstellung erkennt man, dass der jeweilige Fluidkanal 1 im Beispielfall über einen Rechteckprofilquerschnitt verfügt. Dieser Rechteckprofilquerschnitt setzt sich aus zwei Breitseiten 1a und zwei Schmalseiten 1b zusammen. Darüber hinaus verfügt der Lebensmittel-Fluidkanal respektive sein Rechteckprofilquerschnitt über abgerundete Ecken 10. Diese abgerundeten Ecken stellen sich aufgrund seiner Herstellung aus einem Rohrstück durch Innenhochdruckumformen von selbst ein.

Der Lebensmittel-Fluidkanal 1 wird um einen inneren Rohrkern des Rohrringes 7 gewickelt, und zwar genauer um den zylindrischen Innenmantel 5. Außen wird der Lebensmittel-Fluidkanal 1 durch den ebenfalls zylindrischen Außenmantel 6 abgeschlossen. Sofern der wendelförmige Lebensmittel-Fluidkanal 1 mit seinen beiden Schmalseiten 1b einerseits an den Innenmantel 5 und andererseits den Außenmantel 6 flüssigkeitsdicht (beispielsweise durch eine Laserschweißung) angeschlossen ist, wird automatisch in dem Rohrring 7 ein zweiter wendelförmiger Fluidkanal 2 gebildet, nämlich der Wärmeträgermedium-Fluidkanal 2 (vgl. Fig. 1 und 3). Das ist selbstverständlich nicht zwingend. Denn der Lebensmittel-Fluidkanal 1 kann im Beispielfall auch frei und ohne direkten Kontakt in dem Rohrring 7 zwischen dem Innenmantel 5 und dem Außenmantel 6 platziert werden. Auch ein einseitiger Anschluss über eine Schmalseite 1b an entweder dem Innenmantel 5 oder dem Außenmantel 6 ist denkbar und wird von der Erfindung umfasst, wie die Variante nach Fig. 4 belegt, die sowohl einen wendelförmigen Lebensmittel- als auch Wärmeträgermedium-Fluidkanal 1, 2 zeigt, die lediglich einseitig an den Rohrring 7 angeschlossen sind (nämlich an seinem Innenmantel 5).

Im Rahmen dieser sämtlichen Fälle durchströmt das Wärmeträgermedium entlang seines Wärmeträgermedium-Fluidkanals 2 den Rohrring 7 respektive den zylindrischen Wärmetauscher 4 mehr oder minder quer zur Strömungsrichtung des flüssigen Lebensmittels bzw. im Gegenstrom. Sofern der Lebensmittel-Fluidkanal 1 sowohl an den Innenmantel 5 als auch den Außenmantel 6 angeschlossen ist, wird das Wärmeträgermedium durch den Wärmeträgermedium-Fluidkanal 2 ebenfalls wendelförmig geführt, und zwar parallel zur wendelförmigen Führung des flüssigen Lebensmittels. In jedem Fall findet ein Durchströmen des Wärmetauschers 4 im Gegenstrom statt.

Anhand der Detaildarstellung nach Fig. 2 erkennt man darüber hinaus, dass der wendelförmige Fluidkanal, im Ausführungsbeispiel der Lebensmittel-Fluidkanal 1, außen- und/oder innenwandseitig mit im Wesentlichen quer zur Strömung verlaufenden Strömungswiderständen 11 zur Turbulenzerzeugung ausgerüstet ist. Bei diesen Strömungswiderständen mag es sich um eingezogene Sicken, Riffelungen oder vergleichbare Prägungen handeln, die durch ihre Lage quer zur Strömungsrichtung Turbulenzen in das im Innern geführte Medium, vorliegend das flüssige Lebensmittel, eintragen. Man erkennt, dass die Strömungswiderstände 11 im Ausführungsbeispiel jeweils radial im Vergleich zur Wendelachse A bzw. Zylinderachse A angeordnet sind. Dadurch wird nicht nur die Erzeugung von Turbulenzen und folglich die Wärmeübertragung gesteigert, sondern auch die Druckfestigkeit des wendelförmigen Fluidkanals 1.

Im Rahmen der Variante nach Fig. 4 werden einerseits der Lebensmittel-Fluidkanal 1 und anderseits der Wärmeträgermedium-Fluidkanal 2 örtlich über ihre gesamte Länge voneinander getrennt, und zwar durch den zwischengeschalteten Transfermedium-Fluidkanal 3. Hierdurch ist gewährleistet, dass selbst bei einer Leckage des Lebensmittel-Fluidkanals 1 eine Rekontamination durch beispielsweise im Wärmeträgermedium befindliche Mikroben verhindert wird. Denn an dieser Stelle ist das Transfermedium zwischengeschaltet, welches in einem geschlossenen Kreislauf durch den Tranfermedium-Fluidkanal 3 geführt wird oder geführt werden kann.

So oder so bedingt die gewählte Wendelform für zumindest den Fluidkanal 1 im Beispielfall, dass eine zugleich große Wärmeaustauschfläche mit einem kompakten Gesamtaufbau kombiniert wird. Dabei spielt die jeweilige Auslegung der Fluidkanäle 1, 2, 3 für die Erfindung praktisch keine Rolle. Das heißt, der Lebensmittel-Fluidkanal 1 und auch der Wärmeträgermedium-Fluidkanal 2 können ebenso ihre Rollen tauschen wie der Transfermedium-Fluidkanal 3 und der Lebensmittel-Fluidkanal 1 respektive Wärmeträgermedium-Fluidkanal 2. Das heißt, die Führung der einzelnen Medien ist tatsächlich nur beispielhaft und nicht einschränkend zu verstehen.

Vorstehend wurde davon ausgegangen, dass die vorliegende Erfindung ausschließlich zum Erwärmen eines zu pasteurisierenden Produktes zu verwenden ist. Selbstverständlich eignet sich die vorliegende Erfindung auch dazu, das bereits pasteurisierte Produkt anzukühlen.

Weiterhin kann das bereits pasteurisierte Produkt auch die Funktion des Wärmeträgermediums übernehmen, beispielsweise um neues, noch nicht pasteurisiertes Produkt vor- oder anzuwärmen, wobei es selbst abgekühlt wird.

## Patentansprüche

1. Verfahren zur Wärmebehandlung und/oder Abkühlung von flüssigen Lebensmitteln, insbesondere Getränken, vorzugsweise von Fruchtsäften oder dergleichen hochviskosen Flüssigkeiten mit oder ohne Feststoffanteil, wonach das flüssige Lebensmittel durch zumindest ein Wärmeträgermedium im Zuge eines Wärmetausches erwärmt oder abgekühlt wird, wobei das Lebensmittel und/oder das Wärmeträgermedium entlang eines spiral- und/oder wendelförmigen Fluidkanals (1; 2) geführt werden, **dadurch gekennzeichnet, dass** das Lebensmittel indirekt mittels eines zwischengeschalteten Transfermediums durch das Wärmeträgermedium erwärmt wird.

2. Verfahren nach Anspruch 1, **dadurch gekennzeichnet, dass** die Fluidkanäle (1; 2) von einerseits dem Lebensmittel und andererseits dem Wärmeträgermedium örtlich über ihre gesamte Länge durch den Fluidkanal (3) des Transfermediums voneinander getrennt werden.

3. Vorrichtung zur Wärmebehandlung von flüssigen Lebensmitteln, Insbesondere Getränken, vorzugsweise von Fruchtsäften oder dergleichen hochviskosen Flüssigkeiten mit oder ohne Feststoffantell, mit einem Lebensmittel-Fluidkanal (1) und wenigstens einem Wärmeträgermedium-Fluidkanal (2), die miteinander in Wärmekontakt stehen, wobei der Lebensmittel-Fluidkanal (1) und/oder der Wärmeträgermedium-Fluidkanal (2) wenigstens im Bereich eines gemeinsamen Wärmetauschers (4) spiral- und/oder wendelförmig ausgebildet sind, **dadurch gekennzeichnet, dass** zusätzlich ein Transfermedium-Fluidkanal (3) vorgesehen ist, welcher einerseits mit dem Wärmeträgermedium-Fluidkanal (2) und anderseits mit dem Lebensmittel-Fluidkanal (1) in Wärmekontakt steht.

4. Vorrichtung nach Anspruch 3, **dadurch gekennzeichnet, dass** der Lebensmittel-Fluldkanal (1) und der Wärmeträger-Fluidkanal (2) über ihre gesamte Länge innerhalb des Wärmetauschers (4) örtlich durch den zwischengeschalteten Transfermedium-Fluidkanal (3) voneinander getrennt sind.

5. Vorrichtung nach Anspruch 4, **dadurch gekennzeichnet, dass** der jeweilige Fluidkanal (1, 2, 3) einen Rechteckprofilquerschnitt (1a, 1 b) mit gegebenenfalls abgerundeten Ecken (10) aufweist.

6. Vorrichtung nach einem der Ansprüche 3 bis 5, **dadurch gekennzeichnet, dass** der Jeweilige Fluidkanal (1, 2, 3) außen- und/oder innenwandseitig mit im Wesentlichen quer zur Strömung verlaufenden Strömungswiderständen (11) zur Turbulenzerzeugung ausgerüstet ist.

7. Vorrichtung nach einem der Ansprüche 3 bis 6, **dadurch gekennzeichnet, dass** die Fluidkanäle (1, 2, 3) im Innern des außen vorzugsweise zylindrischen Wärmetauschers (4) angeordnet sind.

8. Vorrichtung nach einem der Ansprüche 3 bis 7, **dadurch gekennzeichnet, dass** der Wärmetauscher (4) im Querschnitt aus ein oder mehreren Rohrringen (7) aufgebaut ist.

9. Vorrichtung nach einem der Ansprüche 3 bis 8, **dadurch gekennzeichnet, dass** der jeweilige Fluidkanal (1, 2, 3) im Innern eines Rohrringes (7) platziert ist.

10. Vorrichtung nach einem der Ansprüche 3 bis 9, **dadurch gekennzeichnet, dass** der jeweilige Fluidkanal (1, 2, 3) mit einem Innenmantel (5) und/oder Außenmantel (6) des Rohrringes (7) flüssigkeitsdicht verbunden ist.

11. Vorrichtung nach einem der Ansprüche 3 bis 10, **dadurch gekennzeichnet, dass** der Fluidkanal (1, 2, 3) durch einen Innenhochdruckumformvorgang hergestellt ist.

12. Verwendung eines Wärmetauschers (4) mit wenigstens einem Fluidkanal (1) für eine zu erwärmende oder abzukühlende Flüssigkeit und einem Fluidkanal (2) für ein Wärmeträgermedium und mit einem Transförmedium-Fluidkanal (3), wobei wenigstens einer der beiden Fluidkanäle (1, 2) spiralförmig und/oder wendelförmig ausgebildet ist, zur Wärmebehandlung oder Abkühlung, insbesondere Pasteurisierung, von flüssigen Lebensmitteln, vorzugsweise von Getränken, beispielsweise von Fruchtsäften oder dergleichen hochviskosen Flüssigkeiten mit oder ohne Feststoffanteil.

## Claims

1. Method for heat-treating and/or cooling liquid foods, in particular drinks, preferably fruit juices or such highly viscous liquids with or without solid content, whereupon the liquid food is heated or cooled by at least one heat transfer medium as part of a heat exchange, wherein the food and/or the heat transfer medium is/are guided along a spiral- and/or helical-shaped fluid channel (1; 2), **characterised in that** the food is indirectly heated, by means of an intermediate transfer medium, through the heat transfer medium.

2. Method according to claim 1, **characterised in that** the fluid channels (1; 2) are locally separated from each other, on the one hand by the food and, on the other hand, by the heat transfer medium over their entire length through the fluid channel (3) of the transfer medium.

3. Device for heat-treating liquid foods, in particular drinks, preferably fruit juices or such highly viscous liquids with or without solid content, with a food fluid channel (1) and at least one heat transfer medium fluid channel (2) which are in heat contact with each other, wherein the food fluid channel (1) and/or the heat transfer medium fluid channel (2) are spiral- and/or helical-shaped at least in the area of a common heat exchanger (4), **characterised in that**, additionally, a transfer medium fluid channel (3) is provided which is in heat contact with, on the one hand, the heat transfer medium fluid channel (2) and, on the other hand, with the food fluid channel (1).

4. Device according to claim 3, **characterised in that** the food fluid channel (1) and the heat transfer fluid channel (2) are locally separated from each other over their entire length within the heat exchanger (4) through the intermediate transfer medium fluid channel (3).

5. Device according to claim 4, **characterised in that** the particular fluid channel (1, 2, 3) has a rectangular profile cross-section (1 a, 1 b) with edges (10) rounded if necessary.

6. Device according to one of the claims 3 to 5, **characterised in that** the particular fluid channel (1, 2, 3) is equipped, on the outside wall and/or inside wall, with flow resistors (11) for generating turbulence, said resistors essentially running transversal to the flow.

7. Device according to one of the claims 3 to 6, **characterised in that** the fluid channels (1, 2, 3) are arranged on the inside of the heat exchanger (4) which is preferably cylindical on the outside.

8. Device according to one of the claims 3 to 7, **characterised in that** the heat exchanger (4), in the cross-section, is constructed of one or several tube rings (7).

9. Device according to one of the claims 3 to 8, **characterised in that** the particular fluid channel (1, 2, 3) is placed on the inside of a tube ring (7).

10. Device according to one of the claims 3 to 9, **characterised in that** the particular fluid channel (1, 2, 3) is connected, in a liquid-tight manner, with an inner jacket (5) and/or outer jacket (6) of the tube ring (7).

11. Device according to one of the claims 3 to 10, **characterised in that** the fluid channel (1, 2, 3) is produced by a hydroforming process.

12. Use of a heat exchanger (4) with at least one fluid channel (1) for a liquid to be heated or cooled and a fluid channel (2) for a heat transfer medium and with a transfer medium fluid channel (3), wherein at least one of the two fluid channels (1, 2) is spiral-shaped and/or helical-shaped, for heat-treating or cooling, in particular pasteurising, liquid foods, preferably drinks, for example fruit juices or such highly viscous liquids with or without solid content.

## Revendications

1. Procédé pour le traitement thermique et/ou le refroidissement de produits alimentaires liquides, en particulier de boissons, de préférence de jus de fruits ou liquides à viscosité élevée similaires avec ou sans teneur en matières solides, après quoi le produit alimentaire liquide est chauffé ou refroidi par au moins un fluide caloporteur au cours d'un échange de chaleur, dans lequel le produit alimentaire et/ou le fluide caloporteur sont guidés le long d'un canal fluidique (1 ; 2) en forme de spirale et/ou d'hélice, **caractérisé en ce que** le produit alimentaire est chauffé indirectement à l'aide d'un fluide de transfert intercalé par le support calorifique.

2. Procédé selon la revendication 1, **caractérisé en ce que** les canaux fluidiques (1 ; 2) d'une part du produit alimentaire et d'autre part du fluide caloporteur sont séparés l'un de l'autre localement sur toute leur longueur par le canal fluidique (3) du fluide de transfert.

3. Dispositif pour le traitement thermique de produits alimentaires liquides, en particulier de boissons, de préférence de jus de fruits ou liquides à viscosité élevée similaires avec ou sans teneur en matières solides, avec un canal fluidique de produit alimentaire (1) et au moins un canal fluidique de fluide caloporteur (2) qui sont en contact thermique l'un avec l'autre, dans lequel le canal fluidique de produit alimentaire (1) et/ou le canal fluidique de fluide caloporteur (2) sont réalisés au moins dans la zone d'un échangeur de chaleur commun (4) en forme de spirale et/ou d'hélice, **caractérisé en ce qu'**un canal fluidique de fluide de transfert (3) est en outre prévu, lequel est en contact thermique d'une part avec le canal fluidique de fluide caloporteur (2) et d'autre part avec le canal fluidique de produit alimentaire (1).

4. Dispositif selon la revendication 3, **caractérisé en ce que** le canal fluidique de produit alimentaire (1) et le canal fluidique de fluide caloporteur (2) sont séparés localement l'un de l'autre sur toute leur longueur dans l'échangeur de chaleur (4) par le canal fluidique de fluide de transfert (3) intercalé.

5. Dispositif selon la revendication 4, **caractérisé en ce que** le canal fluidique respectif (1, 2, 3) présente une section de profilé rectangulaire (1 a, 1 b) avec des coins (10) éventuellement arrondis.

6. Dispositif selon l'une quelconque des revendications 3 à 5, **caractérisé en ce que** le canal fluidique respectif (1, 2, 3) est équipé côté paroi extérieure et/ou intérieure de résistances à l'écoulement (11) s'étendant sensiblement transversalement à l'écoulement pour la génération de turbulences.

7. Dispositif selon l'une quelconque des revendications 3 à 6, **caractérisé en ce que** les canaux fluidiques (1, 2, 3) sont disposés à l'intérieur de l'échangeur de chaleur (4) présentant une forme extérieure de préférence cylindrique.

8. Dispositif selon l'une quelconque des revendications 3 à 7, **caractérisé en ce que** la section transversale de l'échangeur de chaleur (4) est constituée d'une ou de plusieurs bagues de tube (7).

9. Dispositif selon l'une quelconque des revendications 3 à 8, **caractérisé en ce que** le canal fluidique respectif (1, 2, 3) est placé à l'intérieur d'une bague de tube (7).

10. Dispositif selon l'une quelconque des revendications 3 à 9, **caractérisé en ce que** le canal fluidique respectif (1, 2, 3) est relié de manière étanche au liquide à une enveloppe intérieure (5) et/ou une enveloppe extérieure (6) de la bague de tube (7).

11. Dispositif selon l'une quelconque des revendications 3 à 10, **caractérisé en ce que** le canal fluidique (1, 2, 3) est fabriqué par un processus de formage sous haute pression interne.

12. Utilisation d'un échangeur de chaleur (4) avec au moins un canal fluidique (1) pour un liquide à chauffer ou à refroidir et un canal fluidique (2) pour un fluide caloporteur et avec un canal fluidique de fluide de transfert (3), au moins l'un des deux canaux fluidiques (1, 2) étant réalisé en forme de spirale et/ou d'hélice, pour le traitement thermique ou le refroidissement, en particulier la pasteurisation de produits alimentaires liquides, de préférence de boissons, par exemple de jus de fruits ou liquides à viscosité élevée similaires avec ou sans teneur en matières solides.
